# EUROPEAN PATENT APPLICATION

(11) **EP 1 855 290 A1**
(43) Date of publication of application: **14.11.2007**
(21) Application number: 07107679.8
(22) Date of filing: 08.05.2007
(51) Int. Cl.: G11B 27/11, G11B 27/10, H04N 5/00, H04N 7/24

(54) **Access of data resources using pause points**

(30) Priority: 12.05.2006 US 383764
(71) Applicant: Palo Alto Research Center Incorporated, Palo Alto, California 94304 (US)
(72) Inventor: Balfanz, Dirk, Redwood City, WA 94062 (US); Smetters, Diana K., Belmont, CA 94002 (US); Durfee, Glenn E, San Francisco, CA 94117 (US); Smith, Trevor, Seattle, WA 98126 (US)
(74) Representative: Skone James, Robert Edmund

(57) **Abstract**

A method of accessing a data resource (14) identifies, by a personal domain controller (10), the data resource accessible by a first device and determines if there is a pause point for the data resource stored in the personal domain controller.

## Description

Multi-media content can be accessed in many different ways. Modern computer networks allow for example videos to be streamed across the Internet. Digital Video Recorders (DVRs) can record television programming and can then replay the recorded content not only through a connected television, but also through a second DVR across a computer network. Similarly, multi-media content is often shared among different people, remotely such as home movies watched by relatives across the country, and locally such as recorded television shows that might be watched by different members of a household at different times.

A user may be watching a video program, such as a movie or recorded television show, or other multi-media content, such as listening to a CD or an audio book. The multi-media content, whether an audio file, a video file, etc., will be referred to as the content, the content stream or the data resource. The user stops or pauses the content stream at a particular point. If the user then goes on a business trip, the user may have the capability of accessing that program from the user's hotel room. The user would then have to restart the program in its entirety or estimate the location in the content stream where it was stopped.

In accordance with a first aspect of the present invention, a personal domain device comprises:
a first port to allow the personal domain device to communicate with a first device;
a memory;
an interface to allow a user to identify a data resource; and
a processor to:
   access the memory to retrieve a pause point for a data resource; and
   send the pause point to a playback device.

In accordance with a second aspect of the present invention, a method of accessing a data resource comprises:
identifying, by a personal domain controller, the data resource accessible by a first device; and
accessing a pause point stored in the personal domain controller for the data resource.

Some examples of methods and devices according to the invention will now be described with reference to the accompanying drawings, in which:-
FIG. I shows an embodiment of a network at a remote site in communication with a network at a home site.
FIG. 2 shows a more detailed embodiment of a communication device having pause point capability.
FIG. 3 shows an embodiment of a method for using pause points in content streams.

Embodiments described here include a method and device that allows consumers of multi-media content such as video or audio programming to have personal pause points in such programs. A pause point determines at which point in the program viewing or listening was last interrupted.

In an example of a playback scenario, imagine a user who watches a recorded television show at home. He pauses the program halfway through the show and then goes on a business trip. On his trip, he brings a portable, electronic device such as a cell phone or PDA. Once he arrives at the hotel at his destination, the user is able to resume watching the show in his hotel room at the point where he paused it when he was at home, by accessing the stored pause point in his portable, electronic device.

For purposes of this discussion, the portable, electronic device, regardless of its form, will be referred to here as a personal domain controller. A playback device is any device that can access stored content and play it back. Playback devices include, but are not limited to, TVs having external DVRs, TVs with internal DVRs, TVs having internal or external media devices, audio playback devices, including CD players, stereos, MP3 players, etc. Communications between the playback device and the PDC may include communications between a TV and the PDC, between a DVR and the PDC either through or independent of an associated TV, etc. No limitation is intended, nor should be inferred, from any examples given here.

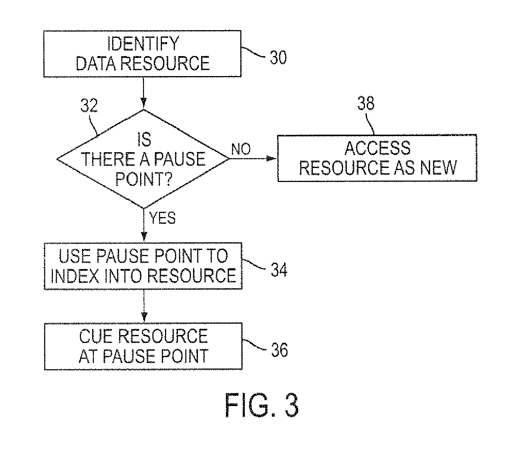

Storing the pause points in a portable electronic device rather than a playback device, allows multiple members of a household to pause recorded shows at different points in time, and to resume them later. For example, one member of a household may decide to watch a show when the other member is not present, and pause the show before going to bed, causing the pause point to be stored in the PDC, rather than the playback device. Another member of the household can watch, pause, and resume watching the show without affecting the first member's pause point of that show. When the first member later decides to resume watching the show, he will continue watching the show where he left off by accessing the pause point from his PDC. The data resources comprise data that can be accessed and played by various playback devices, such as televisions, with or without associated digital video recorders, stereos, MP3 players, etc. The data resource may also be referred to as content. The pause points may be considered indexes into the data resources that begin the playback at a particular point. It must be noted that playback does not necessarily imply that the data resource has been accessed prior to a current session, as will be discussed in more detail with regard to Figure 3.

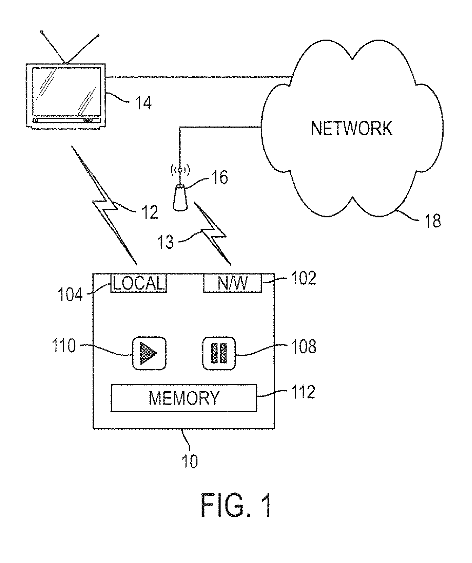

Figure 1 shows one example of such a system that allows users to store pause points in a PDC, where the pause point is a point in data resources as they are played. One skilled in the art will understand that different embodiments of this invention are possible.

A personal domain controller 10 can be used to control a TV 14 just like a regular remote control through a local link 12. Just like a regular remote control, the personal domain controller 10 contains a local port 102 to communicate with the TV 14. The personal domain controller 10 also contains a network interface 104, and digital memory 112.

The TV 14 is connected to a computer network 18. The personal domain controller is connected by connection 13 to the same network by way of its network interface 104 and an access point, shown here as a wireless access point 16. This allows the TV 14 and the personal domain controller 10 to exchange information even if the local port 102 of the personal domain controller is not connected to the TV.

The local link may be infrared or ultra high frequency (UHF), as is commonly found in remote controls, a visible light link, an audio communications link, BlueTooth®, a wireless link in accordance with the Institute of Electrical and Electronic Engineers (IEEE) 802.11 standards, a wired link, etc. It must be noted that any link that does not involve a direct, wired connection is wireless, but the term 'wireless' is often used interchangeably with 'wireless fidelity' or Wi-Fi, associated with the 802.11 standards.

Similarly, the network port 104 may be a wireless port that allows the device to access a wide area network, through which it can access the network 18, or a local area network that is connected to a larger network, such as a WAN. Alternatively, the network port may be a 'wired' network port, such as an Ethernet port that connects via a cable to a network.

The user presses a button on the personal domain controller, such as a "play" button 110 to start or resume playing a certain piece of multi-media content, such as a recorded television program.

If there is already a pause point associated with that content stored on the PDC, where the pause point is an index pointing to the location inside the program, the pause point is transmitted to the TV through either the local link 12 or the wireless link 13. In this case, the TV plays the data resource content starting at the point indicated by the index.

While the content is playing, the TV 14 may continually transmit to the personal domain controller 10 over the wireless link 13 an identifier of the program currently playing as well as a continually changing index to the current position of the program.

When the user presses a button such as the "pause" button 108 on the personal domain controller 10, the personal domain controller stores in the PDC memory 112 the content's identifier and the last position. A user interface may appear on either the personal domain controller or the television or other playback device to query as to whether the pause point should be stored. The 'pause point' is an index into the content stream that identifies the last position where the pause button was pushed. It may be identified by a time elapsed from the beginning of the content stream, a frame number, track number, etc.

One skilled in the art will understand that other ways of communicating the current position and identifier of the multi-media content are possible. For example, instead of continually communicating the identifier and position to the personal domain controller, the personal domain controller 10 could request this information from the TV 14 over the local link 12 or the wireless network 13 when the user presses the pause button 108.

Once the pause point is stored on the PDC, the user can take his PDC with him to continue watching a program on a second TV such as one that might be connected to the same network 18, or have access to the original content through some other means. When the user presses the play button 110 on the personal domain controller 10 to start the movie on the second TV, the personal domain controller will transmit the identifier of the program along with an index pointing to a location inside the program at which playback should resume.

One skilled in the art will understand that other ways of resuming content on a second TV are possible. For example, when playing content on a second TV, the TV could communicate to the personal domain controller the identifier of the data resource, in this case the program. The personal domain controller could then look up in its internal memory 112 the corresponding pause point. If it finds such a pause point, it transmits an index pointing to the corresponding position to the TV, which cues the program to that position.

One skilled in the art can also appreciate how different users can share the same TV by each using their own personal domain controller 10, with each personal domain controller storing their own pause points in their internal memory 112. It is also possible that one personal domain controller may be used for a family or group of people, with the addition of a user identifier to accompany the pause point. A user interface may appear on the PDC, such as the screen of a cell phone or other portable electronic device, which allows the user to identify himself and associate his name or identifier with the pause point. This information would be stored in the PDC, rather than the playback device, along with the program identifier and the pause point.

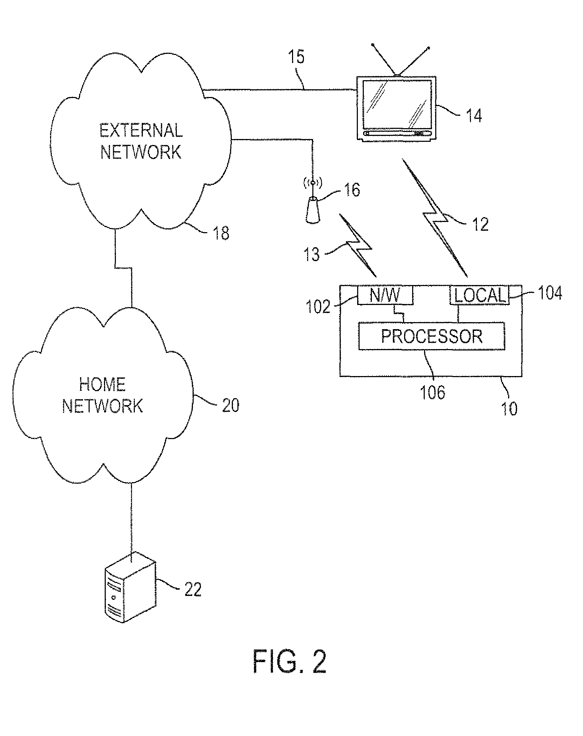

As mentioned above, it is also possible that the pause point could be used to access a program over a network when the user is traveling. Figure 2 shows an example of a network established at a remote site, such as a hotel room. The remote network has a TV 14 and a client 10. The client 10 is some device that the user carriers with him or her, such as a cell phone, personal digital assistant (PDA) or other portable electronic device that is capable of acting as a PDC.

One skilled in the art will understand that not all of the displayed features of the networked system or the device 10 need to be present for all embodiments of the invention. Such a skilled person will understand that the device 10 can be a network appliance or device and need not include a general purpose computer. The device may be referred to as a computer, in that it has a processor 106.

Further, one skilled in the art will understand that a procedure or process may be a self-consistent sequence of computerized processes that lead to a desired result. These processes can be defined by one or more computer instructions. These processes may be stored all or in part on an article of computer readable media containing the instructions. The instructions when executed cause the computer, here the device 10, to perform the processes set out herein.

One skilled in the art will understand that the examples and embodiments discussed here are for better understanding and are in no way intended to, nor should they be interpreted to, limit the scope of the claims to any example given.

In an example of operation of the network, the TV 14 is in a hotel room. The TV has local port 102 for reception of signals across a local link 12 from a remote control, similar to most currently available TVs. The TV also has a network interface 104 for connection to the network 18 like the Internet. The network connection 13 may be a wireless connection, through a wireless access point 16 in accordance with 802.11, or an Ethernet or other wired connection 15. Many other types of content devices may exist and may include kiosks, personal computers, music players, video game consoles, etc.

The client/PDC GUI shows the data resources available on the home network 20, such as video files on the home media server 22, in addition to resources that may be available on the local network 18, such as television channels offered by the hotel. The home media server, such as a DVR, may not reside on a home network, but be directly accessible by the network 18. The user would select the resource that was previously being viewed from the GUI on the PDC 10 for playback on the TV 14. The PDC then provides the selection information for the data resource to the server 22.

In one embodiment, there may be some concerns with regard to the security of the home network. These concerns may be handled with a secure access. For example, the client personal domain controller (PDC) 10 may have received credentials from the credential granting authority of the home network 20. For example, when the user was at home, the PDC 10 was provided with a credential to make the PDC 10 a trusted member of the home network.

The initial, local exchange between the client/PDC (cell phone or PDA) and the sink (hotel TV) would result in the client having the certificate for the TV. The exchange between the client and the source (media server) results in the source identifying the client as a trusted member of the home network. This is just one embodiment of an interaction between the personal domain controller and the home network.

When the user sees the list of videos on the client, the user presses a button on the client to select the desired video. This causes a transfer message to be sent to the source, which includes the credential of the TV to be whitelisted for one-time access to the video server or DVR. A transfer session descriptor is sent to the client as a trusted member of the home network and the client passes that information on to the TV. The TV recognizes the client's certificate from the initial, local interaction and accepts the transfer session descriptor.

The TV then connects to the server with the request for the video, which responds with the necessary code to allow the TV to render the content. The TV is allowed access to the server through the firewall, as its credential matches the credential for which the firewall was configured. The server then transmits the content to the TV, which is identified by its credential.

Regardless of any particular embodiment of secured transactions between the source, the sink and the client, or in this example, the media server, the hotel TV and the PDC, the PDC would have storage on the PDC of the 'stop' or 'pause' point in the data content stream. The system may then allow the user to continue to watch the video from that point by retrieving the location in the data stream and indexing into the content file to that point. The pause point would be used as an index into the content stream, and the TV or playback apparatus would use that point to cue up the content stream at that point. An embodiment of this method is shown in flowchart form in Figure 3.

The user, whether at home or from a remote location, identifies the data resource through the PDC at 30. At 32, the PDC determines whether there is a pause point for that data resource stored in the PDC. This may also include determining if the pause point is for that particular user.

While generally, the pause point will be one acquired and stored in the PDC as a result of the user pressing `pause' or 'stop' on the PDC, it is also possible that the pause point was not stored from a previous interaction. For example, two users may have recorded the same program the night before. The next day, the first user has not viewed the content, but the second user has. The second user provides a pause point associated with a particular scene or event in the program to the first user. The first user uses his PDC to enter and store the pause point, allowing the first user to skip to the pause point, based upon the information provided by the second user.

For example, the two users recorded a basketball game in which there was an incredible play that became the turning point in the game. The first user has watched the game and went back to a point just before that play, storing that pause point for later replay. The first user could then supply the second user with the pause point, allowing the second user to have a pause point that is not related to a previous viewing of the program. A pause point that is acquired and stored in a manner not associated with a viewing of the program will be referred to as a 'preloaded' pause point. The first user may manually enter the pause point, could receive it as a text message, have it 'beamed' into the phone or PDA through an infrared point, etc., all of which will be referred to as 'entering' the pause point. This would result in there being a preloaded pause point for that program stored in the PDC.

lf there is no pause point, either for the resource or the user, the data resource is accessed and playback begins as if there had been no previous access of the data resource, or as if it were 'new' at 38. If there is a pause point in the PDC memory at 32, the stored pause point may be used to index into the resource at 34. The data resource may be cued at the pause point at 36 and playback would begin from the pause point. The user may also have the option of starting playback from the beginning, ignoring the pause point, accessing the data resource as if new.

As mentioned previously, the process of determining the pause point may be accomplished in many different ways. For example, the user selection of the resource may provide the identifier of the resource to be used to determine if there is a pause point stored. In another example, when the user selects the resource, the TV or playback device may provide the identifier that allows the PDC to use the identifier as an index into a storage table to locate the pause point. One skilled in the art will appreciate that the mechanism of determining the pause point may take many forms.

In this manner, a data resource may be accessed by a user at different times, but experience the contents of the data resource in a more continuous or sequential manner. The interaction between the PDC, the playback apparatus and the data resource is transparent to the user, improving the user's experience over previous approaches.

## Claims

1. A personal domain device, comprising:
a first port to allow the personal domain device to communicate with a first device;
a memory;
an interface to allow a user to identify a data resource; and
a processor to:
access the memory to retrieve a pause point for a data resource; and
send the pause point to a playback device.

2. The personal domain device of claim 1, wherein the first port further comprises one selected from the group consisting of: an infrared port, an audio port, a visible light port, a BiueTooth port, a radio in accordance with IEEE 802.11 standards, a wired port and an ultrahigh frequency radio.

3. The personal domain device of claim 1 or claim 2, wherein the processor is further adapted to:
receive the pause point for a data resource from the playback device; and
store the pause point and an identifier of the data resource in the memory.

4. The personal domain device of any of the preceding claims, wherein the processor is further adapted to:
receive the pause point for the data resource through the interface; and
store the pause point and an identifier of the data resource in the memory

5. A device according to any of the preceding claims, wherein the device is adapted to communicate with the playback device located remotely, for example via a communication network such as a public switched telephone network, Ethernet, Internet or the like.

6. A method of accessing a data resource comprising:
identifying, by a personal domain controller, the data resource accessible by a first device; and
accessing a pause point stored in the personal domain controller for the data resource.

7. The method of claim 6, further comprising cueing the data resource responsive to the pause point.

8. The method of claim 6 or claim 7, further comprising accessing the first device across a network.

9. The method of any of claims 6 to 8, further comprising exchanging security credentials between the personal domain controller and the first device.

10. The method of any of claims 6 to 9, the data resource further comprising one selected from the group consisting of: a television program, a movie, an audio program, a slide show, a CD and an audio book.

11. An article of computer-readable media containing instructions that when executed by a computer cause the computer to:
identify, by the computer, a data resource accessible by a first device; and
access a pause point stored in a memory on the computer for the data resource.

12. A communication system comprising a personal domain device according to any of claims 1 to 5; and a playback device.
